# EUROPÄISCHE PATENTSCHRIFT

(11) **EP 1 359 378 B1**
(45) Veröffentlichungstag und Bekanntmachung des Hinweises auf die Patenterteilung: **31.05.2006**
(21) Anmeldenummer: 03008318.2
(22) Anmeldetag: 10.04.2003
(51) Int. Cl.: F24D 13/02, F24H 9/06, E06B 3/54, E04B 2/88, H05B 3/84

(54) **Vorrichtung für eine lösbare Befestigung von dickwandigen Mehrschicht-Glasplatten, insbesondere elektrischen Glasheizkörpern**
Device for removable attachment of thick-walled multi-layer glass plates, in particular for electrical glass heating elements
Dispositif pour fixation amovible de multiplaques à parois épaisses, en particulier de radiateurs électriques en verre

(30) Priorität: 04.05.2002 DE 20207105 U
(43) Veröffentlichungstag der Anmeldung: 05.11.2003
(73) Patentinhaber: SWS Gesellschaft für Glasbaubeschläge mbH, 51545 Waldbröl (DE)
(72) Erfinder: Schmitz, Hans-Dieter, 53809 Ruppichteroth (DE); Rosenthal, Horst, 51545 Geilenkausen (DE)
(74) Vertreter: Lippert, Stachow & Partner

(56) Entgegenhaltungen:
- EP-A- 0 994 308
- DE-A- 4 008 500
- DE-A- 10 016 399
- DE-A- 19 809 617

## Beschreibung

Die Erfindung betrifft eine Vorrichtung zur lösbaren Befestigung von dickwandigen Mehrschicht-Glasplatten, insbesondere von scheibenförmigen elektrischen Glasheizkörpern mit Stromeinspeisung, an Wänden oder **Tragkonstruktionen nach dem Oberbegriff des Anspruches 1.**

### Stand der Technik

Mit der Entwicklung von laminierten Mehrschicht-Glasscheiben mit an eine Stromquelle angeschlossenen elektrisch leitfähigen Schichten zum Erzeugen von Licht-, Ton- und/oder Wärme-Effekten hat die Elektrifizierung dieser Glasscheiben und in engem Zusammenhang damit die einwandfreie Befestigung der Glasscheiben an Wänden und Traggestellen zunehmend an Bedeutung gewonnen.

Als besonders wichtig hat sich die einwandfreie und sichere Halterung der Glasscheiben an Wänden und Tragkonstruktionen insbesondere im Innenraumbereich, aber auch im Außenbereich insofern gezeigt, als bei einer senkrechten Befestigung von dickwandigen Mehrschicht-Glasscheiben und Glasplatten, wie sie auch bei scheibenförmigen elektrischen Glasheizkörpern mit Stromeinspeisung zur Anwendung kommen, hohe Anforderungen an die Montagesicherheit gestellt werden. Die Befestigungsvorrichtungen sollen außerdem aber auch so gestaltet sein, daß einerseits eine einfache und sichere Montage, andererseits aber auch eine leichte Demontage der Glasscheiben und Glasplatten ohne Beschädigung gewährleistet ist.

Aus DE 198 09 617 A1 ist eine Befestigungseinrichtung für Platten, insbesondere für Glasplatten mit mehreren Halteelementen, die zwischen der Rückseite der Glasplatte und einer Tragkonstruktion, wie z.B. eine Gebäudefassade, angebracht sind. Grundsätzlich ist jedes der Halteelemente über ein Scharniergelenk mit der Platte verbunden, wobei die Scharniergelenke eines jeden Haltelementes um vertikale und um horizontale Schwenkachsen beweglich sind. Mit der Glasplatte ist ein Aufnahmeteil verbunden, das ein Schwenklager bildet, und mit der Tragkonstruktion ist ein dazu passendes Ankerstück fest verschraubt. Das Auflageteil und das Ankerstück haben jeweils zu der Tragkonstruktion und zu der Glasplatte parallel ausgerichtete radiale U-förmige Schlitze, die an ihrem Grunde zylindrisch ausgerundet sind. Diese Schlitze dienen für den Eingriff eines das Auflageteil und das Ankerstück verbindenden Kupplungsstückes. Dieses Kupplungsstück hat die Gestalt eines doppelten T, dessen beide Querarme um 90° bezüglich der Längsachse des Kupplungsstückes gegeneinander verdreht sind und mit ihren zylindrischen Scharnierzapfen in die Schlitze an dem Auflageteil und dem Ankerstück eingreifen. Da die Auflageteile und die Ankerstücke der verschiedenen Halteelemente bereits vor der Aufhängung der Glasplatte einerseits an der Glasplatte und zum anderen an der Tragkonstruktion fest montiert werden müssen, ist das Aufhängen der Glasplatte mittels der die Auflageteile und die Ankerstücke der einzelnen Halteelementen verbindenden Kupplungsstücke in dem engen Spalt zwischen Glasplatte und Tragkonstruktion vergleichsweise umständlich und somit zeitaufwendig. Dies gilt insbesondere für die anschließende Sicherung der Scharnierzapfen der Kupplungsstücke in den radialen Schlitzen an den Ankerstücken mittels geeigneter Sicherungsteile, die zusätzlich an dem Ankerstück noch mit Schraubbolzen gesichert werden müssen.

Eine weitere Halterung für eine elektrische Heizplatte ist aus EP 0 994 308 A1 bekannt. Hierbei sind zwischen der elektrischen Heizplatte und der Tragkonstruktion mindestens zwei obere Halter und ein unterer Halter vorgesehen, die an der Tragkonstruktion mittels Schraubbolzen befestigt sind. Die oberen Halter weisen jeweils einen nach oben erweiterten U-förmigen Einhängeschlitz für einen Schraubbolzen auf, der an der Rückseite der Heizplatte befestigt ist und mit seinem Bolzenkopf die Ränder des Einhängeschlitzes hintergreift. An den beiden oberen Haltern sitzt der Schraubbolzen jeweils mit seinem Schaft auf dem ausgerundeten unteren Ende des Einhängeschlitzes auf, während der Einhängeschlitz an dem oder den unteren Haltern für einen an der Rückseite der Heizplatte befestigten Schraubbolzen nach unten hin offen ist, so dass der an den beiden oberen Haltern aufgehängte Heizkörper sich nach unten hin unbehindert ausdehnen oder zusammenziehen kann, ohne dass Spannungen in dem Heizkörper oder der Heizplatte erzeugt werden. Durch die verdeckte Anordnung der Schraubbolzen an der Rückseite der Heizplatte oder des Heizkörpers ist es nach Aufhängung des Heizkörpers nur mit einem größeren Montageaufwand möglich, die Schraubbolzen in dem engen Zwischenraum zwischen Tragkonstruktion und Heizkörper so weit festzuspannen, dass der Heizkörper oder die Heizplatte auch auf Dauer an der Wand ausreichend sicher befestigt ist.

Aus DE 100 16 399 A1 ist weiterhin ein Wandheizkörper bekannt, der im wesentlichen aus einer Heizglasscheibe mit einer nicht sichtbaren transparenten Heizschicht besteht. Die Heizschicht wird randseitig über zwei Kontaktstreifen oder über mehr als zwei Kontaktelektroden kontaktiert, die an mehreren Halterungen zwischen Wandheizkörper und Hauswand angeordnet sind. Auch bei dieser Haltevorrichtung ist ein hoher Montageaufwand für die Anbringung des Wandheizkörpers an der Gebäudewand erforderlich.

### Aufgabenstellung

Der Erfindung liegt die Aufgabe zugrunde, eine Vorrichtung für eine lösbare Befestigung von dickwandigen Mehrschicht-Glasplatten, insbesondere von scheibenförmigen elektrischen Glasheizkörpern mit Stromeinspeisung, an Wänden oder Traggestellen zu schaffen, mit der es in einfacher Weise möglich ist, die Glasscheiben oder Glasplatten mit einem geringen Montageaufwand absolut sicher und dauerhaft zu befestigen.

Diese Aufgabe findet ihre Lösung gemäß der Erfindung bei einer Vorrichtung nach dem Oberbegriff des Anspruches 1 dadurch, daß der Haltesteg jedes unteren Einhängeteils endseitig keilförmig abgeschrägt und die der Stirnfläche des unteren Wandbefestigungsteils gegenüberliegende Stirnseite des Einhängeteils in einem solchen Abstand angeordnet ist, daß die Glasplatte oder der Heizkörper mit den daran befestigten Einhängeteilen in den Querschlitzen an den Wandbefestigungsteilen senkrecht angehoben bzw. senkrecht abgesenkt und nach Lösen aus den Querschlitzen an den oberen Wandbefestigungsteilen um die Tragzapfen an den unteren Einhängeteilen von der Wand oder der Tragkonstruktion weg gekippt und aus den Querschlitzen an den unteren Wandbefestigungsteilen vollständig nach vorne herausgehoben werden kann.

Besonders vorteilhafte Weiterbildungen der Erfindung sind in den Ansprüchen 2 bis 8 gekennzeichnet.

Die Montage und die Demontage der Glasscheibe oder -platte wird maßgeblich dadurch erleichtert, daß der Haltesteg des Einhängeteils an dem unteren Halter endseitig derart keilförmig abgeschrägt und die der Stirnfläche des Wandbefestigungsteils gegenüberliegende Stirnseite des Einhängeteils so weit entfernt ist, daß die Glasplatte oder der Heizkörper mit den daran befestigten Haltern zuerst gegenüber den Wandbefestigungsteilen senkrecht angehoben und nach Lösen aus den oberen Wandbefestigungsteilen um die Tragzapfen an den unteren Einhängeteilen so weit nach vorn gekippt werden kann, um anschließend aus den Querschlitzen an den unteren Wandbefestigungsteilen schräg nach vorne herausgehoben zu werden. Beim Einhängen der Glasscheibe oder Glasplatte in die Wandbefestigungsteile wird in umgekehrter Reihenfolge vorgegangen.

Die Erfindung hat auch den Vorteil, daß die zweiteiligen Halter jeweils aus einem Wandbefestigungsteil und einem davon lösbaren Einhängeteil bestehen. Bei der Montage der Halter werden zuerst die Wandbefestigungsteile an einer Bauwerkswand oder an einer geeigneten Tragkonstruktion montiert, während die Einhängeteile an der Rückseite der dickwandigen Glasplatten oder Glasheizkörper angebracht werden. Die Einhängeteile stehen dann von der Rückseite der Glasplatte oder dem Glasheizkörper hervor. Dieser kann anschließend mit wenigen Handgriffen mit den unteren Einhängeteilen in die zugehörigen unteren Wandbefestigungsteile schräg von oben eingehängt, leicht angehoben, dabei in eine senkrechte Stellung in Bezug auf die oberen Wandbefestigungsteile gebracht und anschließend in die endgültige Montagestellung an sämtlichen Haltern abgesenkt werden. Die Schrägstellung der Scheibe dient neben der leichten Montage hauptsächlich zum Reinigen der Scheibe auch an der Rückseite. Zur Demontage können die vorstehend beschriebenen Arbeitsschritte in umgekehrter Reihenfolge ebenso einfach ausgeführt werden.

Besonders vorteilhaft für eine einwandfreie Sicherung der Mehrschicht-Glasplatten ist es, wenn jedes Wandbefestigungsteil einen vorzugsweise zylindrischen Sockel mit einem parallel zur Plattenebene horizontal ausgerichteten Querschlitz sowie einem in Richtung der Sockelachse verlaufenden senkrechten Längsschlitz zum Befestigen des an der Glasplatte befestigten Einhängeteils derart aufweist, daß die Glasplatte oder der Heizkörper bei der Wandmontage mit den zu den Wandbefestigungsteilen passenden Einhängeteilen von oben her in den Längsschlitz an dem Wandbefestigungsteil eingehängt werden kann, wobei jedes Einhängeteil einen in den Längsschlitz an dem Wandbefestigungsteil paßgenau eingreifenden flachen Haltesteg mit querverlaufenden Tragzapfen aufweist und in den Querschlitz an dem Wandbefestigungsteil so tief eingreift, daß die Tragzapfen am Grunde des Querschlitzes anliegen und die Glasplatte in der Montagestellung sichern.

Zur vorübergehenden Sicherung der Glasscheibe sowohl bei der Montage als auch bei der Demontage ist es außerdem besonders vorteilhaft, daß der Querschlitz an jedem unteren Wandbefestigungsteil eine größere Tiefe als der Querschlitz an jedem oberen Wandbefestigungsteil aufweist. Hierdurch wird die Glasscheibe sowohl beim Einsetzen als auch beim Ausheben aus den Befestigungsvorrichtungen im unteren Bereich bis zur endgültigen Montage oder Demontage in einer Schräglage abgefangen.

Für eine präzise Ausrichtung der Glasscheibe oder -platte in der Montagestellung ist es weiterhin vorteilhaft, daß das Einhängeteil des oberen Halters an der Stirnfläche des zugehörigen Wandbefestigungsteils flächig anliegt.

**In einer bevorzugten Ausführungsform kann zumindest ein Teil der Halter** einen von dem Einhängeteil koaxial nach vorne hervorstehenden Montagezapfen aufweisen, der durch eine Bohrung in der Glasplatte hindurchragt und an deren Außenseite mit einer Abschlusskappe verschraubt ist.

**Die Verschraubung der Glasplatte oder des Heizkörpers an den Bohrungen für die Halter ist vorteilhafterweise mit beidseitigen Silikon-**Zwischenscheiben versehen, so dass eine mechanische Beanspruchung der Glasplatte durch die Verschraubung an den Haltern vermieden wird.

Außerdem sind einzelne Halter mit einem Elektroanschluss versehen und an dem stirnseitigen Ende des Einhängeteils mit der Glasplatte oder dem Heizkörper mittels Klebbefestigung fest verbunden. Hierbei können Anschlussklemmen für eine elektrische Verbindung der als Heizkörper ausgebildeten Glasplatte mit einem Stromzuführungskabel in einer stirnseitigen Vertiefung an dem Einhängeteil des betreffenden Halters versenkt angeordnet sein und auf diese Weise den Kontakt zu einer elektrisch leitenden Schicht des Glas-Heizkörpers herstellen.

Bevorzugte Ausführungsbeispiele der Erfindung sind in der Zeichnung schematisch dargestellt. Es zeigen
- Fig. 1: einen oberen und einen unteren Halter für eine dickwandige Mehrschicht-Glasplatte oder einen Glasheizkörper in perspektivischer Ansicht,
- Fig. 2: eine auseinandergezogene Darstellung des unteren Halters von Fig. 1 ebenfalls in perspektivischer Ansicht.
- Fig. 3: eine auseinandergezogene Seitenansicht des unteren Halters von Fig. 1 und 2,
- Fig. 4: eine Seitenansicht eines oberen Halters mit Glasplatte,
- Fig. 5: eine Draufsicht auf den Halter von Fig. 4
- Fig. 6: eine Seitenansicht eines unteren Halters mit Glasplatte,
- Fig. 7: eine Draufsicht auf den Halter von Fig. 6,
- Fig. 8: eine schematische Vorderansicht eines oberen oder unteren Halters mit elektrischen Anschlußklemmen zur Stromzuführung, beispielsweise zu einem elektrischen Glasheizkörper, und
- Fig. 9: einen Schnitt durch den Halter von Fig. 8 gemäß Schnittlinie IX-IX.

Die in der Zeichnung gezeigte Vorrichtung dient zur lösbaren Befestigung von dickwandigen Mehrschicht-Glasplatten 1, insbesondere von scheibenförmigen elektrischen Glasheizkörpern mit Stromeinspeisung, an Wänden oder Traggestellen.

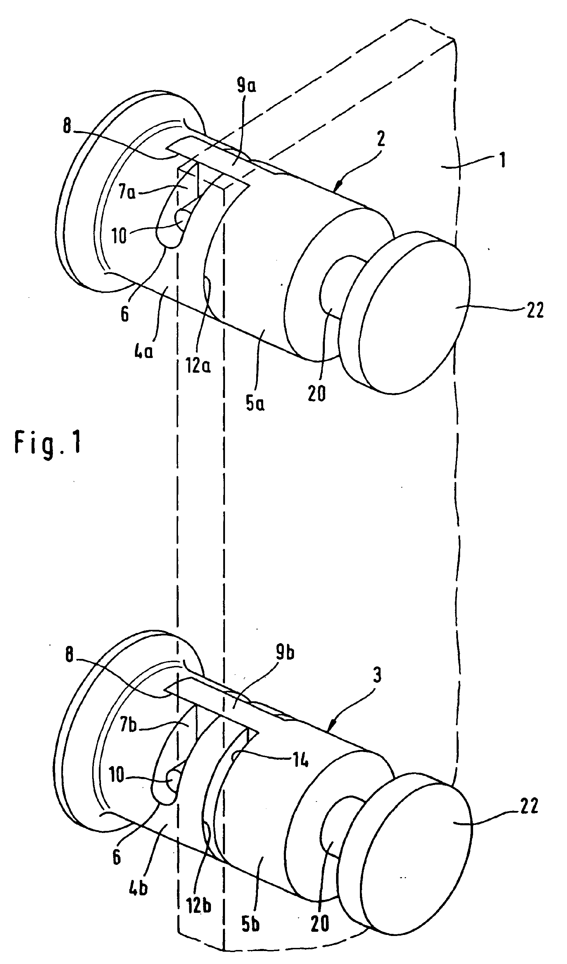

Es sind mehrere Halter 2 bzw. 3 vorgesehen sind, die mit der aufrecht stehenden Glasplatte 1 oder dem Heizkörper an der Rückseite in einem oberen und in einem unteren Bereich verschraubt oder fest verklebt sind. Jeder Halter besteht aus einem Wandbefestigungsteil 4a bzw. 4b und einem davon lösbaren Einhängeteil 5a bzw. 5b, die mit zur Plattenebene parallelen, horizontal ausgerichteten Auflagern und senkrecht zu diesen ausgerichteten Stegteilen gabelförmig ineinandergreifen. Die Platte 1 mit den daran befestigten Einhängeteilen 5a, 5b kann in die Wandbefestigungsteile 4a, 4b von oben her so weit eingehängt werden, daß die an der Platte 1 befestigten unteren Einhängeteile 5b zuerst von Auflagern 6 an den unteren Wandbefestigungsteilen 4b abgestützt werden. Nach einem geringfügigen Anheben und Verschwenken der Platte 1 in eine senkrechte Lage können auch die oberen Einhängeteile 5a in die oberen Wandbefestigungsteile 4a derart einrasten, daß die Platte 1 durch Auflage sowohl an den unteren als auch an den oberen Wandbefestigungsteilen 4a, 4b in der Montagestellung gesichert ist (Fig. 1).

Wie insbesondere in Fig. 1 bis 7 zu erkennen ist, hat jedes Wandbefestigungsteil 4a, 4b einen vorzugsweise zylindrischen Sockel mit einem parallel zur Plattenebene horizontal ausgerichteten Querschlitz 7a bzw. 7b sowie einem in Richtung der Sockelachse verlaufenden senkrechten Längsschlitz 8 zum Befestigen des an der Glasplatte 1 befestigten Einhängeteils 5a bzw. 5b, so daß die Glasplatte 1 oder der Heizkörper bei der Wandmontage mit den zu den Wandbefestigungsteilen 4a, 4b passenden Einhängeteilen 5a, 5b von oben her in den Längsschlitz 8 an dem Wandbefestigungsteil 4a, 4b eingehängt werden kann. Jedes Einhängeteil 5a, 5b hat einen in den Längsschlitz 8 an dem Wandbefestigungsteil 4a, 4b paßgenau eingreifenden flachen Haltesteg 9a bzw. 9b mit querverlaufenden Tragzapfen 10, 11, der in den Querschlitz 7a bzw. 7b an dem Wandbefestigungsteil 4a, 4b so tief eingreift, daß die beiderseits des Haltesteges 9a bzw. 9b hervorstehenden Tragzapfen 10, 11 am Grunde des Querschlitzes 7a, 7b anliegen und die Glasplatte 1 in der Montagestellung sichern (Fig. 1).

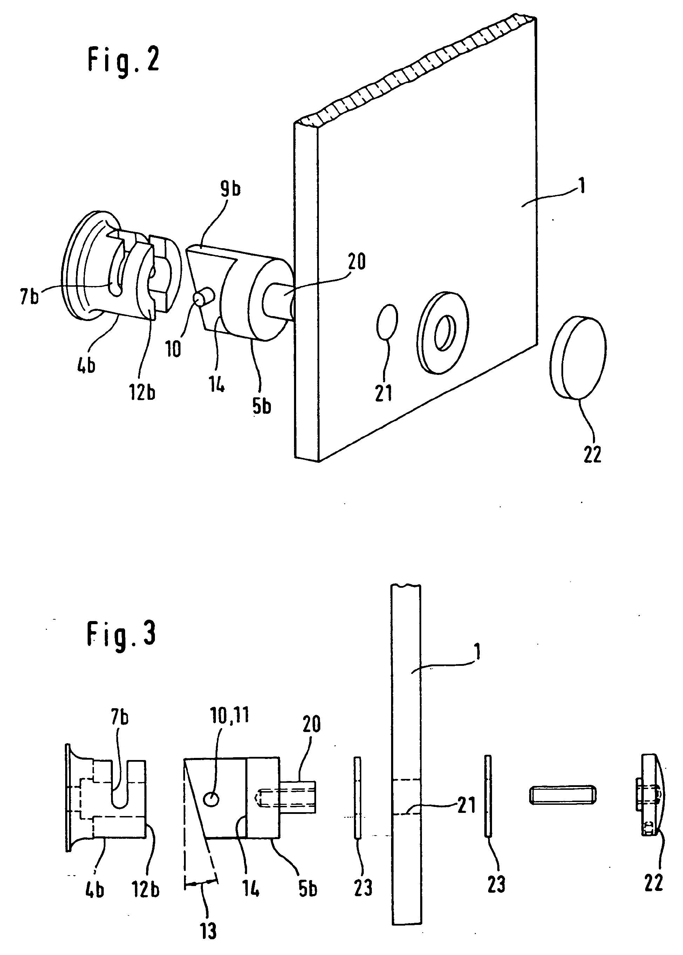

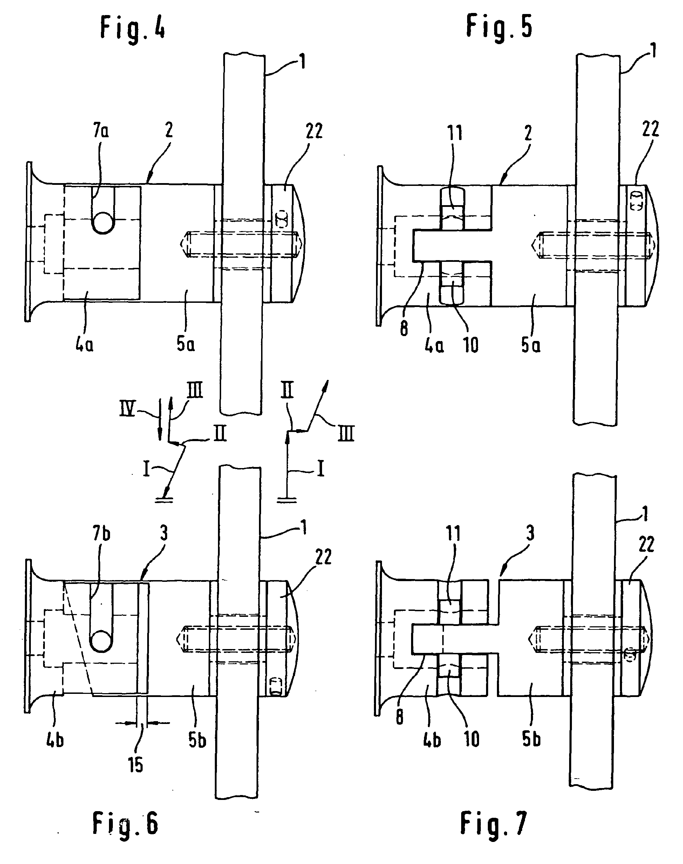

Wie insbesondere die Gegenüberstellungen von Fig. 1 und 2 und Fig. 4 und 6 erkennen lassen, hat der Querschlitz 7b an jedem unteren Wandbefestigungsteil 4b eine größere Tiefe als der Querschlitz 7a an jedem oberen Wandbefestigungsteil 4a. Außerdem liegt das Einhängeteil 5a des oberen Halters 2 an der Stirnfläche 12a des zugehörigen Wandbefestigungsteils 4a flächig an. Im Unterschied dazu ist der Haltesteg 9b des Einhängeteils 5b an dem unteren Halter 3 gemäß Fig. 2, 3 und 6 endseitig in einem Winkel 13 von etwa 15 bis 20° derart keilförmig abgeschrägt und die der Stirnfläche 12b des Wandbefestigungsteils 4b gegenüberliegende Stirnseite 14 des Einhängeteils 5b ist in einem solchen Abstand 15 (Fig. 6) angeordnet, daß die Glasplatte 1 oder der Heizkörper bei einer Demontage mit den daran befestigten Einhängeteilen 5a, 5b in einem ersten Schritt in den unterschiedlich tiefen Querschlitzen 7a, 7b an den Wandbefestigungsteilen 4a, 4b senkrecht angehoben und nach Lösen aus den oberen Wandbefestigungsteilen 4a um die Tragzapfen 10, 11 an den unteren Einhängeteilen 5b nach vorn gekippt und anschließend aus den Querschlitzen 7b an den unteren Wandbefestigungsteilen 5b vollständig nach vorne herausgehoben werden kann. Dies ist mit Richtungspfeilen I, II und III rechts oberhalb von Fig. 6 entsprechend dargestellt. Durch die Schrägstellung der Scheibe oder Glasplatte beim Ein- und Aushängen aus den Wandbefestigungsteilen wird nicht nur die Montage und Demontage der Scheibe, sondern auch das Reinigen an Vor- und Rückseite ganz wesentlich erleichtert.

Bei der Montage wird demgegenüber umgekehrt vorgegangen. Dies ist ebenfalls links oberhalb von Fig. 6 gezeigt. Zuerst wird die Glasplatte 1 oder der Glasheizkörper mit den unteren Einhängeteilen 5b in die unteren Wandbefestigungsteile 4b eingehängt, sodann geringfügig angehoben und in die senkrechte Lage geschwenkt, um anschließend wieder in alle oberen und unteren Wandbefestigungsteile 4b abgesenkt zu werden. Dies ist ebenfalls mit Richtungspfeilen I, II, III und IV dargestellt.

Für die Befestigung an der Glasplatte 1 weisen die Halter 2, 3 gemäß Fig. 1 bis 7 einen von dem Einhängeteil 5a bzw. 5b koaxial nach vorne hervorstehenden Montagezapfen 20 auf, der durch eine Bohrung 21 in der Glasplatte 1 hindurchragt und an deren Außenseite mit einer Abschlusskappe 22 verschraubt ist. Die Verschraubung der Glasplatte 1 oder des Heizkörpers an den Bohrungen 21 für die Halter 2, 3 ist außerdem mit beidseitigen Silikon-Zwischenscheiben 23 versehen.

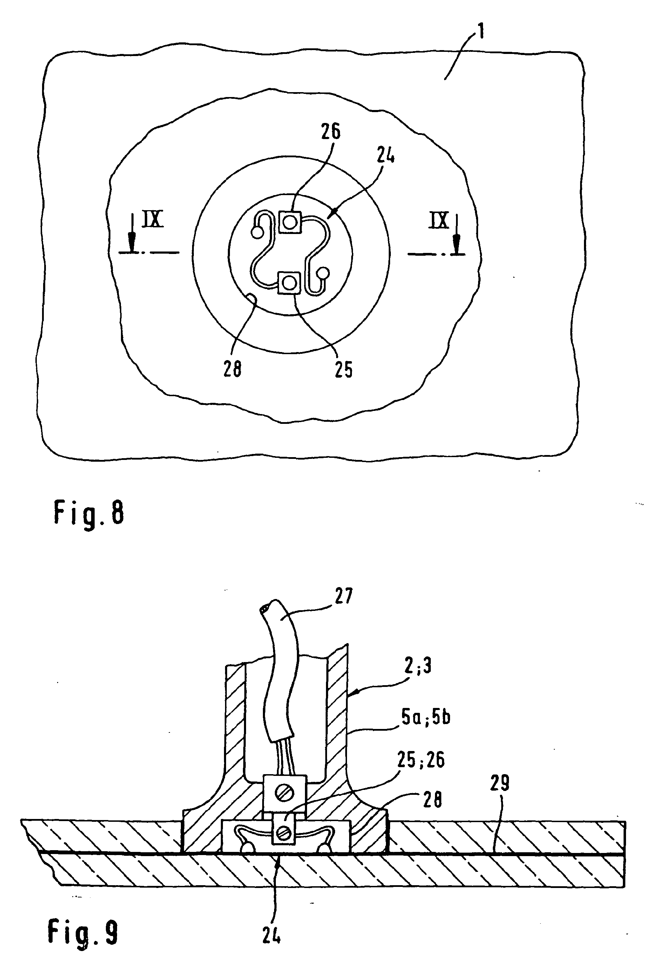

Wie in Fig. 8 und 9 weiterhin gezeigt ist, können auch einzelne Halter 2, 3 mit einem Elektroanschluß 24 versehen und an dem stirnseitigen Ende des Einhängeteiles 5a, 5b mit der Glasplatte 1 oder dem Heizkörper mittels Klebebefestigung fest verbunden sein. Bei dieser Ausführung sind Anschlussklemmen 25, 26 für eine elektrische Verbindung der als Heizkörper ausgebildeten Glasplatte 1 mit einem Strom-Zuführungskabel 27 in einer stirnseitigen Vertiefung 28 an dem Einhängeteil des betreffenden Halters 2, 3 versenkt angeordnet, die den Kontakt zu einer elektrisch leitenden Schicht 29 des Glas-Heizkörpers herstellen.

### Liste der Bezugszeichen

- 1: Mehrschicht-Glasplatte, Glasheizkörper
- 2: Halter
- 3: Halter
- 4a: Wandbefestigungsteil
- 4b: Wandbefestigungsteil
- 5a: Einhängeteil
- 5b: Einhängeteil
- 6: Auflager
- 7a: Querschlitz
- 7b: Querschlitz
- 8: Längsschlitz
- 9a: Haltesteg
- 9b: Haltesteg
- 10: Tragzapfen
- 11: Tragzapfen
- 12a: Stirnfläche
- 12b: Stirnfläche
- 13: Winkel
- 14: Stirnseite
- 15: Abstand
- 20: Montagezapfen
- 21: Bohrung
- 22: Abschlußkappe
- 23: Silikon-Zwischenscheiben
- 24: Elektroanschluß
- 25: Anschlußklemme
- 26: Anschlußklemme
- 27: Strom-Zuführungskabel
- 28: Vertiefung
- 29: elektrisch leitende Schicht

- I: Richtungspfeil
- II: Richtungspfeil
- III: Richtungspfeil
- IV: Richtungspfeil

## Patentansprüche

1. Vorrichtung zur lösbaren Befestigung von dickwandigen Mehrschicht-Glasplatten, insbesondere von scheibenförmigen elektrischen Glasheizkörpern mit Stromeinspeisung, an Wänden oder **Tragkonstruktionen, mit** mehreren Haltern (2, 3), die **an einer** aufrecht stehenden Glasplatte (1) oder einem Heizkörper an dessen Rückseite in einem oberen und in einem unteren Bereich verschraubt oder fest verklebt sind, und die aus oberen und unteren Wandbefestigungsteilen (4a, 4b) und davon lösbaren Einhängeteilen (5a, 5b) bestehen, wobei diese Teile mit zur Plattenebene parallelen, horizontal ausgerichteten Auflagern (6) und senkrecht zu diesen ausgerichteten oberen und unteren Haltestegen (9a, 9b) derart gabelförmig ineinandergreifen, daß die Platte (1) mit den unteren und oberen Einhängeteilen (5a, 5b) in **Querschlitzen (7a, 7b) an den** Wandbefestigungsteilen (4a, 4b) von oben her so weit eingehängt werden kann, daß die Platte (1) durch Auflage sowohl an den unteren als auch an den oberen Wandbefestigungsteilen (4a, 4b) in der Montagestellung gesichert ist,
**dadurch gekennzeichnet, daß der Haltesteg (9b) jedes** unteren Einhängeteils (5b) endseitig keilförmig abgeschrägt und **die der Stirnfläche (12b) des unteren Wandbefestigungsteils (4b) gegenüberliegende Stirnseite (14) des Einhängeteils (5b) in einem** solchen Abstand (15) angeordnet ist, daß die Glasplatte (1) oder der Heizkörper mit den daran befestigten Einhängeteilen (5a, 5b) in den Querschlitzen (7a, 7b) an den Wandbefestigungsteilen (4a, 4b) senkrecht angehoben bzw. senkrecht abgesenkt und nach Lösen aus den Querschlitzen (7a) an den oberen Wandbefestigungsteilen (4a) um die Tragzapfen (10, 11) an den unteren Einhängeteilen (5b) von der Wand oder der Tragkonstruktion weg gekippt und aus den Querschlitzen (7b) an den unteren Wandbefestigungsteilen (4b) vollständig nach vorne herausgehoben werden kann.

2. Vorrichtung nach Anspruch 1, **dadurch gekennzeichnet, daß** jedes Wandbefestigungsteil (4a, 4b) einen zylindrischen Sockel mit einem parallel zur Plattenebene horizontal ausgerichteten Querschlitz (7a, 7b) sowie einem in Richtung der Sockelachse verlaufenden senkrechten Längsschlitz (8) zum Befestigen des an der Glasplatte (1) befestigten Einhängeteils (5a, 5b) derart aufweist, daß die Glasplatte (1) oder der Heizkörper bei der Wandmontage mit den zu den Wandbefestigungsteilen (4a, 4b) passenden Einhängeteilen (5a, 5b) von oben her in den Längsschlitz (8) an dem Wandbefestigungsteil (4a bzw. 4b) eingehängt werden kann, wobei jedes Einhängeteil (5a, 5b) einen in den Längsschlitz (8) an dem Wandbefestigungsteil (4a, 4b) paßgenau eingreifenden flachen Haltesteg (9a bzw. 9b) mit querverlaufenden Tragzapfen (10, 11) aufweist und in den Querschlitz (7a, 7b) an dem Wandbefestigungsteil (4a, 4b) so tief eingreift, daß die Tragzapfen (10, 11) am Grunde des Querschlitzes (7a, 7b) anliegen und die Glasplatte (1) in der Montagestellung sichern.

3. Vorrichtung nach Anspruch 1 oder 2, **dadurch gekenn- zeichnet,** daß der Querschlitz (7b) an jedem unteren Wandbefestigungsteil (4b) eine größere Tiefe als der Querschlitz (7a) an jedem oberen Wandbefestigungsteil (4a) aufweist.

4. Vorrichtung nach einem der Ansprüche 1 bis 3, **dadurch ge- kennzeichnet,** daß das Einhängeteil (5a) des oberen Halters (2) an der Stirnfläche (12a) des zugehörigen Wandbefestigungsteils (4a) flächig anliegt.

5. Vorrichtung nach einem der Ansprüche 1 bis 4, **dadurch** ge- **kennzeichnet,** daß die Halter (2, 3) einen von dem Einhängeteil (5a, 5b) koaxial nach vorne hervorstehenden Montagezapfen (20) aufweisen, der durch eine Bohrung (21) in der Glasplatte (1) hindurchragt und an deren Außenseite mit einer Abschlußkappe (22) verschraubt ist.

6. Vorrichtung nach Anspruch **5, dadurch gekennzeichnet, daß** die Verschraubung der Glasplatte (1) oder des Heizkörpers an den Bohrungen (21) für die Halter (2, 3) mit beidseitigen Silikon-Zwischenscheiben (23) versehen ist.

7. Vorrichtung nach einem der Ansprüche 1 bis 4, **dadurch** ge- **kennzeichnet,** daß einzelne Halter (2, 3) mit einem Elektroanschluß (24) versehen und an dem stirnseitigen Ende des Einhängeteiles (5a, 5b) mit der Glasplatte (1) oder dem Heizkörper mittels Klebebefestigung fest verbunden sind.

8. Vorrichtung nach Anspruch 7, **dadurch gekennzeichnet, daß** Anschlußklemmen (25, 26) für eine elektrische Verbindung der als Heizkörper ausgebildeten Glasplatte (1) mit einem Strom-Zuführungskabel (27) in einer stirnseitigen Vertiefung (28) an dem Einhängeteil (5a bzw. 5b) des betreffenden Halters versenkt angeordnet sind und den Kontakt zu einer elektrisch leitenden Schicht (29) des Glas-Heizkörpers herstellen.

## Claims

1. Device for the removable attachment of thick-walled multi-layer glass plates, particularly pane-like electric glass heating radiators with power supply, to walls or supporting structures, said device comprising several holders (2, 3) which are screwed or bonded to a vertically upright glass plate (1) or a heating radiator in an upper or lower region on the rear side thereof, and which consist of upper and lower wall-mounting parts (4a, 4b) and hang-in parts (5a, 5b) that may be detached there from, which parts engage in a fork-like fashion with horizontally aligned bearings (6) which are parallel to the plate plane and upper and lower supporting webs (9a, 9b) vertically aligned to said bearings, so that the plate (1) may be hung with the lower and upper hang-in parts (5a, 5b) in transverse slots (7a, 7b) on the wall-mounting parts (4a, 4b) from the top and to an extent such that the plate (1) is secured in the mounting position by being supported both on the lower and the upper wall-mounting parts (4a, 4b), **characterized in, that** the supporting web (9b) of each lower hang-in part (5b) is chamfered in a key-shape on the end side thereof, and the front (14) of the hang-in part (5b) opposing the face (12b) of the lower wall-mounting part (4b) being arranged with such a distance (15) that the glass plate (1) or the heating radiator with the hang-in parts (5a, 5b) fixed to it may be vertically lifted or lowered in the transverse slots (7a, 7b) on the wall-mounting parts (4a, 4b) and after removing from the transverse slots (7a) may be tilted about the supporting pins (10, 11) on the lower hang-in parts (5b) and away from the wall or the supporting structure and may be fully lifted in a forward direction out of the transverse slots (7b) on the lower wall-mounting parts (4b).

2. Device according to claim 1, **characterized in that** each wall-mounting part (4a, 4b) includes a cylindrical base with a horizontally aligned transverse slot (7a, 7b) parallel to the plate plane as well as a vertical longitudinal slot (8) extending in the direction of the axis of the base for mounting the hang-in part (5a, 5b) fixed to the glass plate (1), so that during wall-mounting the glass plate (1) or the heating radiator may be hung with the hang-in parts (5a, 5b) matching the wall-mounting parts (4a, 4b) from the top in the longitudinal slot (8) on the wall-mounting part (4a or 4b), each hang-in part (5a, 5b) including a flat supporting web (9a or 9b) having transversely extending supporting pins (10, 11) and engaging in a form-fit fashion in the longitudinal slot (8) on the wall-mounting part (4a, 4b) and deeply engaging in the transverse slot (7a, 7b) on the wall-mounting part (4a, 4b) to such an extent that the supporting pins (10, 11) rest against the bottom of the transverse slot (7a, 7b) and secure the glass plate (1) in the mounting position.

3. Device according to claim 1 or 2, **characterized in that** the transverse slot (7b) on each lower wall-mounting part (4b) has a greater depth than the transverse slot (7a) on each upper wall-mounting part (4a).

4. Device according to one of the claims 1 to 3, **characterized in that** the hang-in part (5a) of the upper holder (2) rests plane against the face (12a) of the accompanying wall-mounting part (4a).

5. Device according to one of the claims 1 to 4, **characterized in that** the holders (2, 3) include a mounting pin (20) coaxially protruding forwardly from the hang-in part (5a, 5b), which mounting pin protrudes through a bore (21) in the glass plate (1) and is screwed on the external side thereof to a cover plate (22).

6. Device according to claim 5, **characterized in that** the screwed connection of the glass plate (1) or the heating radiator to the bores (21) for the holders (2, 3) is provided on both sides with silicon washers (23).

7. Device according to one of the claims 1 to 4, **characterized in that** individual holders (2, 3) are provided with a power supply (24) and are rigidly connected on the front end of the hang-in part (5a, 5b) to the glass plate (1) or the heating radiator by bonding.

8. Device according to claim 7, **characterized in that** connection terminals (25, 26) for an electrical connection of the glass plate (1) formed as a heating radiator to a power supply cable (27) are arranged in a countersunk fashion in a front-side recess (28) on the hang-in part (5a or 5b) of the respective holder and make the contact to an electrically conducting layer (29) of the glass heating radiator.

## Revendications

1. Dispositif pour la fixation amovible de plaques de verre feuilleté à parois épaisses, en particulier de radiateurs électriques en verre en forme de vitres avec alimentation en courant, à des murs ou des constructions porteuses avec plusieurs supports (2, 3) qui sont vissés ou collés fermement à une plaque de verre debout (1) ou à un radiateur sur le dos de celui-ci dans une zone supérieure et dans une zone inférieure et qui sont constitués par des pièces de fixation murale supérieures et inférieures (4a, 4b) et des pièces de suspension qui peuvent être détachées de celle-ci (5a, 5b), ces pièces s'engrenant l'une dans l'autre en forme de fourche avec des appuis (6) parallèles au plan de la plaque, orientés horizontalement et perpendiculairement à ces barrettes de maintien supérieures et inférieures (9a, 9b) alignées de telle manière que la plaque (1) puisse être suspendue par le haut avec les pièces de suspension inférieures et supérieures (5a, 5b) dans des fentes transversales (7a, 7b) sur les pièces de fixation murale (4a, 4b) aussi profondément que la plaque (1) est bloquée dans la position de montage par appui aussi bien sur les pièces de fixation murale inférieures que supérieures (4a, 4b), **caractérisé en ce que** la barrette de maintien (9b) de chaque pièce de suspension inférieure (5b) est biseautée en forme de clavette du côté de l'extrémité et que le côté frontal (14) de la pièce de suspension (5b) qui est opposé à la face frontale (12b) de la pièce de fixation murale inférieure (4b) est placé à un tel écart (15) que la plaque de verre (1) ou le radiateur puisse être levé ou baissé verticalement avec les pièces de suspension qui lui sont fixées (5a, 5b) dans les fentes transversales (7a, 7b) sur les pièces de fixation murale (4a, 4b) et, après être détaché des fentes transversales (7a) sur les pièces de fixation murale supérieures (4a), puisse être basculé autour des tourillons porteurs (10, 11) sur les pièces de suspension inférieures (5b) en s'éloignant du mur ou de la construction porteuse et être complètement sorti des fentes transversales (7b) sur les pièces de fixation murale inférieures (4b) vers l'avant en soulevant.

2. Dispositif selon la revendication 1, **caractérisé en ce que** chaque pièce de fixation murale (41,4b) présente un socle cylindrique avec une fente transversale (71, 7b) orientée horizontalement parallèlement au plan de la plaque ainsi qu'avec une fente longitidunale (8) perpendiculaire en direction de l'axe du socle pour fixer la pièce de suspension (5a,5b) fixée à la plaque de verre (1) de telle manière que la plaque de verre (1) ou le radiateur peut être accroché, lors du montage mural, avec les pièces de suspension (5a, 5b) qui correspondent aux pièces de fixations murales (4a, 4b)par le haut dans la fente longitidunale (8) sur la pièce de fixation murale (4a ou 4b), chaque pièce de suspension (5a, 5b) présentant une barrette de maintien plate (9a ou 9b) qui s'engrène à ajustement serré dans la fente longitidunale (8) avec des tourillons porteurs transversaux (10,11) et s'engrène dans la fente transversale (71, 7b) sur la pièce de fixation murale (4a,4b) de manière aussi profonde que les tourillons porteus (10,11) reposent au fond de la fente transversale (7a,7b) et bloquent la plaque de verre (1) en position de montage.

3. Dispositif selon la revendication 1 ou 2, **caractérisé en ce que** la fente transversale (7b) présente, sur chaque pièce de fixation murale inférieure (4b), une plus grande profondeur que la fente transversale (7a) sur chaque pièce de fixation murale supérieure (4a).

4. Dispositif selon l'une des revendications 1 à 3, **caractérisé en ce que** la pièce de suspension (5a) du support supérieur (2) repose en surface sur la face frontale (12a) de la pièce de fixtion murale correspondante (4a).

5. Dispositif selon l'une des revendications 1 à 4, **caractérisé en ce que** les supports (2, 3) présentent un tourillon de montage (20), qui fait saillie de la pièce de suspension (5a, 5b) coaxialement vers l'avant, qui traverse une forure (21) dans la plaque de verre (1) et qui est vissé sur le côté extérieur de celle-ci avec un capuchon de fermeture (22).

6. Dispositif selon la revendication 5, **caractérisé en ce que** le vissage de la plaque de verre (1) ou du radiateur est pourvu, sur les forures (21) pour les supports (2, 3), de rondelles intermédiaires en silicone des deux côtés (23).

7. Dispositif selon l'une des revendications 1 à 4, **caractérisé en ce que** différents supports (2, 3) sont pourvus d'un raccord électrique (24) et sont reliés fixement, à l'extrémité du côté frontal de la pièce de suspension (5a, 5b), à la plaque de verre (1) ou au radiateur par une fixation à la colle.

8. Dispositif selon la revendication 7, **caractérisé en ce que** des bornes de raccord (25, 26) pour une liaison électrique de la plaque de verre (1) configurée comme radiateur à un câble d'alimentation en courant (27) peuvent être placées noyées dans un évidement côté frontal (28) sur la pièce de suspsension (5a ou 5b) du support correspondant et, de cette manière, établir le contact avec une couche électroconductrice (29) du radiateur en verre.
